# FASCICULE DE BREVET EUROPEEN

(11) **EP 3 020 601 B1**
(45) Date de publication et mention de la délivrance du brevet: **15.05.2019**
(21) Numéro de dépôt: 15194358.6
(22) Date de dépôt: 12.11.2015
(51) Int. Cl.: B60P 1/44

(54) **VÉHICULE ÉQUIPÉ D'UN MONTE-CHARGE**
FAHRZEUG, DAS MIT EINEM LASTENAUFZUG AUSGESTATTET IST
VEHICLE PROVIDED WITH A GOODS LIFT

(30) Priorité: 12.11.2014 FR 1460880
(43) Date de publication de la demande: 18.05.2016
(73) Titulaire: LG Développement, 56150 Baud (FR)
(72) Inventeur: LE GOFF, Jean-Philippe, 56150 BAUD (FR)
(74) Mandataire: Regimbeau

(56) Documents cités:
- EP-A1- 1 232 904
- EP-A2- 0 032 457
- WO-A1-2014/138797
- DE-U1-202012 102 225
- FR-A- 1 458 603

## Description

### DOMAINE TECHNIQUE GENERAL

L'invention se situe dans le domaine de la manutention et du levage d'objets.

La présente invention concerne un véhicule, notamment un véhicule utilitaire, équipé d'un monte-charge permettant de charger et de décharger des objets lourds dans/sur et hors de ce véhicule.

Il s'agit d'objets dont le poids est tel qu'il ne permet pas leur chargement ou leur déchargement par un opérateur seul, c'est-à-dire un poids compris entre 20 kg et 150 kg environ.

Par "objet", on entend tout type de marchandises, matériels, fournitures, matériaux divers, machines, outillage ou appareils mobiles.

Une application particulière de l'invention représentée sur les dessins concerne la manutention d'une machine de chantier, tel qu'une pilonneuse. De façon non limitative, il pourrait également s'agir à titre d'exemple d'une plaque vibrante, d'une pompe, d'un groupe hydraulique ou électrogène, d'un appareil électroménager, d'une cabine de toilettes publiques mobile ou d'un objet en béton.

### ETAT DE L'ART

On connaît déjà dans l'état de la technique, différents dispositifs de levage permettant de déplacer des objets du niveau du sol jusqu'à l'intérieur d'un véhicule et inversement. Il s'agit notamment de dispositifs manuels faisant appel à la force humaine ou actionnés par la force humaine ou encore de dispositifs mécanisés fonctionnant avec un apport extérieur d'énergie.

L'inconvénient d'un dispositif faisant appel à la force humaine, tel qu'une rampe inclinée, est qu'il nécessite que les opérateurs déploient une force importante pour pousser ou tirer l'objet et le déplacer progressivement sur la rampe. En outre, cette opération s'accompagne d'un risque de chutes ou de blessures de l'opérateur parfois élevé.

Un dispositif actionné par la force humaine, tel que par exemple une poulie, un palan ou un système hydraulique manuel, bien qu'il présente l'avantage de réduire la puissance musculaire instantanée nécessaire au levage, présente également l'inconvénient de rallonger de façon importante la durée de l'opération de manutention.

En outre, l'emploi de tels dispositifs est très encadré, voire interdit pour certains par la réglementation du travail, en raison des risques d'accidents ou de maladies professionnelles.

Enfin, les inconvénients des dispositifs nécessitant un apport extérieur d'énergie, par exemple d'énergie électrique, hydraulique, magnétique ou pneumatique, sont leur coût élevé, leur frais de maintenance et la nécessité d'un contrôle régulier obligatoire comme pour les hayons élévateurs hydrauliques de véhicules par exemple.

On connaît également d'après le document DE 202012102225, un véhicule de pompiers, équipé d'un dispositif de monte-charge qui permet de déplacer un objet pour le sortir du véhicule et l'amener au sol et inversement. Ce monte-charge comprend un bras monté pivotant à son extrémité inférieure par rapport à un châssis solidaire du véhicule et une plateforme support de charge montée articulée à l'extrémité supérieure de ce bras pivotant. Un actionneur, tel un vérin à gaz, relie l'extrémité inférieure du bras pivotant au châssis.

L'opérateur, à l'aide d'une poignée située sur la plateforme, peut faire pivoter manuellement le bras pivotant, de façon à le faire passer d'une position de "rangement" dans laquelle son extrémité supérieure est légèrement basculée vers l'intérieur du véhicule et la plateforme est dans le véhicule, à une position dite "de point haut" dans laquelle il est vertical et enfin, à une position de "déchargement" dans laquelle son extrémité supérieure est basculée vers l'extérieur du véhicule et la plateforme est au sol.

Lors de ce mouvement de pivotement du bras vers l'extérieur, le vérin à gaz s'allonge et accumule de l'énergie qu'il peut restituer lors du mouvement inverse.

Ce dispositif de monte-charge présente de nombreux inconvénients énumérés ci-après.

Il nécessite obligatoirement l'utilisation de la force musculaire de l'opérateur notamment de ses bras, de sorte que la puissance développée est limitée.

Par ailleurs, l'effort musculaire est obligatoirement simultané au mouvement de déplacement de la plateforme et l'effort de levage varie de façon importante pendant la course de la plateforme qui doit passer par un point haut. Les muscles de l'opérateur sont donc fortement sollicités, notamment pendant la descente de la plateforme, ou alors le poids de l'objet à décharger doit être limité.

Enfin, le mouvement de la plateforme devant être effectué par un effort musculaire de l'opérateur, il est nécessairement lent.

### PRESENTATION DE L'INVENTION

Un objectif de l'invention est de pallier les inconvénients précités.

L'invention a donc pour but de proposer un véhicule équipé d'un dispositif qui permette à un opérateur de lever ou de descendre des objets entre le sol et ce véhicule, sans effort, de façon rapide, sécurisée et sans apport d'une énergie extérieure.

L'invention a également pour but d'offrir un dispositif de déplacement de l'objet qui soit simple, robuste et nécessite peu d'entretien.

A cet effet, l'invention concerne un véhicule, notamment véhicule utilitaire, équipé d'un monte-charge configuré pour déplacer un objet, telle qu'une machine de chantier, du sol vers l'intérieur du véhicule et inversement, ce monte-charge comprenant :
- un châssis fixe solidarisé audit véhicule,
- une plateforme support dudit objet, mobile par rapport audit châssis, selon un mouvement ascendant, entre une position, dite "basse", dans laquelle elle est au niveau du sol ou sensiblement au niveau du sol, de façon à autoriser le chargement ou le déchargement dudit objet depuis ou vers le sol par un opérateur, et une position, dite "haute", et inversement selon un mouvement descendant,
- au moins un moyen de guidage en déplacement de ladite plateforme par rapport audit châssis,
- au moins un moyen de verrouillage de ladite plateforme en position haute.

Conformément à l'invention, ledit moyen de guidage en déplacement comprend une glissière et un coulisseau dont l'un est solidaire de ladite plateforme mobile et l'autre solidaire du châssis, de façon à réaliser un mouvement de translation de la plate-forme par rapport audit châssis, dans un sens vertical ou sensiblement vertical entre lesdites positions basse et haute de la plateforme, et ce monte-charge comprend :
- au moins un moyen de verrouillage de ladite plateforme en position basse,
- au moins un dispositif à déformation élastique, dont une partie fixe est liée mécaniquement audit châssis et dont une partie déformable élastiquement ou mobile élastiquement est liée mécaniquement à ladite plateforme mobile,
ce dispositif à déformation élastique étant configuré pour :
- accumuler, pendant le mouvement de translation descendant de la plateforme jusqu'à sa position basse, l'énergie potentielle du champ de la pesanteur fournie préalablement par au moins un opérateur monté sur la plateforme mobile lorsqu'elle est en position haute ou fournie préalablement par au moins un opérateur monté sur la plateforme mobile (3, 3') et par l'objet placé sur la plateforme mobile lorsqu'elle est en position haute,
- contrôler la vitesse de descente de la plateforme mobile,
- restituer cette énergie potentielle accumulée d'une façon sensiblement constante et avec une vitesse contrôlée, à ladite plateforme mobile, pour assurer, en totalité ou en accompagnement, le mouvement ascendant de celle-ci.

Ce dispositif présente l'avantage d'utiliser le fait qu'un être humain peut accumuler de l'énergie potentielle avec un rendement particulièrement élevé grâce à des déplacements naturels de son corps, comme le fait de monter sur une plateforme ou un plancher de véhicule ce qui correspond sensiblement au fait de monter sur une ou plusieurs marches.

Cet avantage est utilisé pour ensuite accumuler et restituer cette énergie potentielle à l'aide d'un dispositif approprié et ainsi soulever un objet à moindre effort pour l'opérateur.

Selon d'autres caractéristiques avantageuses et non limitatives de l'invention, prises seules ou en combinaison :
- le dispositif à déformation élastique est un vérin à gaz dont la poussée est sensiblement constante et la vitesse contrôlée et qui comprend un corps et une tige mobile dont l'un est solidaire de la plateforme et l'autre est solidaire du châssis ;
- ledit vérin à gaz est configuré pour présenter une force ascendante supérieure au poids de la plateforme mobile et de l'objet à déplacer, de façon à assurer en totalité l'ascension autonome de la plateforme avec l'objet ;
- le vérin à gaz a une force ascendante inférieure au poids de la plateforme mobile et de l'objet à déplacer et en ce que le monte-charge comprend un dispositif de levage complémentaire actionné par la force musculaire de l'opérateur ou le poids de son corps dans le champ gravitationnel ;

- le dispositif de levage complémentaire comprend un levier de commande actionnant par poussée ou tirage un câble ou une chaîne reliée mécaniquement à la plateforme mobile ;
- le dispositif de levage complémentaire comprend un marchepied actionnant un câble ou une chaîne reliée mécaniquement à la plateforme mobile ;
- les moyens de verrouillage de la plateforme en position haute et/ou les moyens de verrouillage de la plateforme en position basse comprennent une soupape mobile d'obstruction de l'orifice du piston d'un vérin qui empêche le fluide présent dans le vérin de passer d'une chambre à l'autre de celui-ci ;
- le châssis fixe est équipé d'une barre rigide permettant à l'opérateur de s'y accrocher pour faciliter et sécuriser son ascension sur la plateforme mobile, cette barre rigide étant équipée d'au moins une poignée d'actionnement des moyens de verrouillage de la plateforme en position haute et/ou des moyens de verrouillage de la plateforme en position basse ;
- les moyens de verrouillage de la plateforme en position haute comprennent un crochet, dit "premier crochet", monté pivotant autour d'un axe fixé au châssis et dont l'extrémité recourbée est configurée pour coopérer avec un doigt de verrouillage solidaire de la plate-forme mobile ;
- les moyens de verrouillage de la plateforme en position haute sont des moyens de verrouillage automatique, en ce que le premier crochet est équipé d'un ressort de rappel qui tend en permanence à le ramener en position verrouillée et en ce que lesdits moyens de verrouillage comprennent un organe d'actionnement qui permet de faire pivoter ledit premier crochet à l'encontre de la force du ressort de rappel pour l'amener dans une position déverrouillée dans laquelle il libère ledit doigt de verrouillage ;
- les moyens de verrouillage de la plateforme en position basse comprennent un crochet, dit "deuxième crochet", monté pivotant autour d'un axe fixé au châssis et dont l'extrémité recourbée est configurée pour coopérer avec une crémaillère solidaire de la plate-forme ;
- le premier crochet et le deuxième crochet sont liés de façon cinématique, de sorte que leurs placements en position verrouillée ou déverrouillée sont concomitants ;
- la plate-forme est équipée d'au moins un amortisseur permettant de contrôler sa vitesse de montée ou de descente ;
- le véhicule comprend un dispositif d'ajustement de la force de poussée exercée par le ou les dispositifs à déformation élastique.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
- la figure 1 représente une vue en perspective d'un véhicule utilitaire, équipé du monte-charge conforme à l'invention,
- les figures 2 et 3 sont des vues partielles, en perspective, d'un premier mode de réalisation du monte-charge conforme à l'invention, respectivement en position haute et basse,
- la figure 4 est une vue de côté partielle de la plateforme du monte-charge de la figure 3,
- la figure 5 est une vue partielle, en perspective, des moyens de verrouillage de la plateforme en position haute et basse,
- les figures 6 et 7 sont des vues en perspective, d'une partie du monte-charge des figures 2 et 3 et d'un dispositif de levage complémentaire,
- la figure 8 est une vue en perspective d'un deuxième mode de réalisation du monte-charge conforme à l'invention, et
- la figure 9 est une vue de détail d'un élément de la figure 8.

### DESCRIPTION DETAILLEE

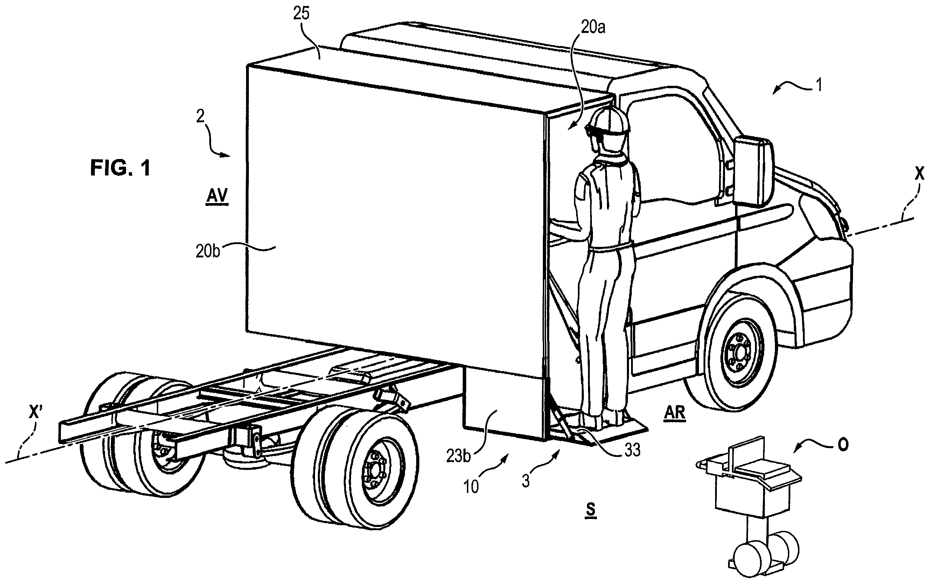

En se reportant à la figure 1, on peut voir que l'invention concerne un véhicule 1, notamment un véhicule utilitaire, équipé d'un monte-charge 10, configuré pour déplacer un objet O du sol S vers l'intérieur du véhicule 1 et inversement.

Dans l'exemple représenté sur les figures, cet objet O est une machine de chantier, et plus précisément une pilonneuse.

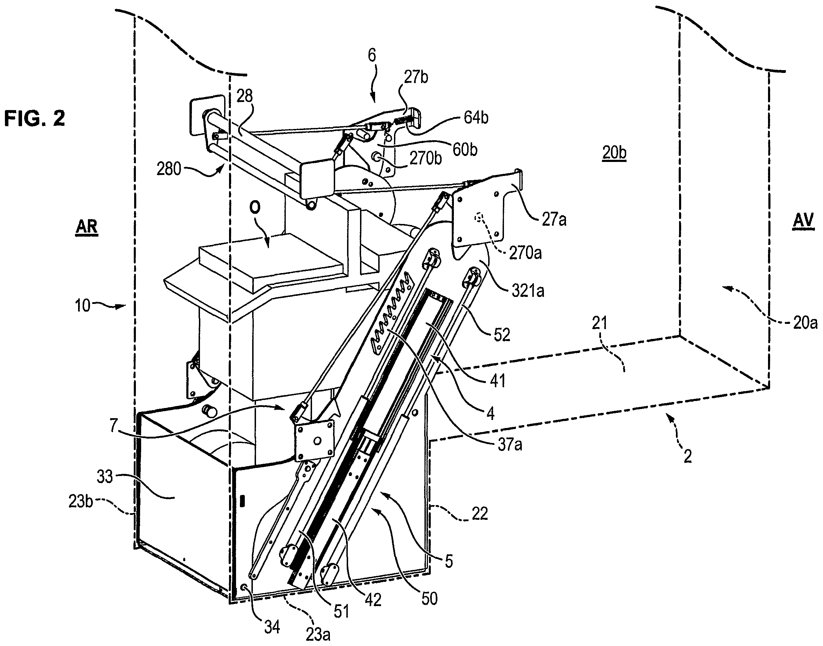

Selon un premier mode de réalisation représenté sur les figures 1 et 2, le monte-charge 10 comprend un châssis fixe 2, une plateforme support 3, des moyens 4 de guidage en déplacement de ladite plateforme 3 par rapport au châssis 2, au moins un dispositif à déformation élastique 5, au moins un moyen 6 de verrouillage de la plateforme support 3 en position haute et au moins un moyen 7 de verrouillage de cette même plateforme en position basse.

Plusieurs modes de réalisation de ces différents éléments vont maintenant être décrits plus en détail.

Le châssis 2 est fixé sur le véhicule et est constitué d'une pluralité de profilés et de tôles métalliques, assemblés entre eux de façon à définir une structure ayant sensiblement la forme générale d'un parallélépipède rectangle. Les profilés forment les montants et les longerons de la structure.

De préférence, ce châssis 2 est disposé perpendiculairement à l'axe longitudinal médian X-X' du véhicule 1 et débouche côté passager du véhicule 1.

Dans la suite de la description et des revendications, par convention, on désignera le côté avant AV du monte-charge 10 (à gauche sur la figure 1) et son côté arrière AR (à droite sur la figure 1), par rapport au sens d'introduction de l'objet O, ici la pilonneuse.

Comme on peut le voir sur les figures 1 à 3, le châssis 2 comprend deux tôles rectangulaires verticales, disposées parallèlement l'une à l'autre, qui définissent deux flancs latéraux 20a, 20b.

Une autre tôle rectangulaire plus étroite est pliée à angle droit, de façon à présenter une partie horizontale, qui constitue le fond 21 du châssis, et une partie verticale qui s'étend vers le bas et qui constitue une paroi arrière 22.

Le fond 21 relie entre eux les deux flancs latéraux 20a et 20b, par leurs bords inférieurs respectifs, sauf dans la partie arrière du châssis 2.

Deux tôles supplémentaires 23a et 23b, rectangulaires ou carrées, sont fixées dans le prolongement du bord inférieur arrière de chacune des deux flancs latéraux 20a et 20b. Elles sont parallèles l'une à l'autre, verticales et sont dénommées "parois latérales". Ces parois latérales 23a et 23b délimitent avec la paroi arrière 22, un puits 24, à l'intérieur duquel est déplacée la plateforme 3.

Enfin, de préférence, les deux flancs latéraux 20a, 20b sont reliés à leur partie supérieure par une tôle 25, qui assure la rigidification de l'ensemble de la structure.

On notera que la forme et les dimensions du châssis 2 peuvent être adaptées différemment en fonction de nature et des dimensions de l'objet O que l'on souhaite charger dans le véhicule 1. Le châssis 2 a pour rôle de permettre la fixation des autres éléments 3 à 7.

La plateforme support 3 est également réalisée à l'aide de plusieurs tôles métalliques, assemblées entre elles par des moyens appropriés, tels que vissage, boulonnage ou soudage.

De façon avantageuse, la plateforme 3 comprend un fond 30 horizontal et une paroi arrière verticale 31, préférentiellement de forme carrée ou rectangulaire, ainsi que deux parois latérales 32a, 32b.

Chaque paroi latérale 32a, 32b comprend une partie rectangulaire 320a, 320b, qui se prolonge entre son coin supérieur avant et la partie centrale de son arête supérieure, par une aile 321a, 321b de forme oblongue, inclinée vers le haut et vers l'avant.

De façon avantageuse, la plateforme 3 comprend également une porte 33, de préférence une porte basculante, montée pivotante vers l'arrière autour d'un axe de rotation 34. Cet axe 34 s'étend à la partie inférieure de la porte et entre les deux angles inférieurs arrière des deux parois latérales 32a, 32b.

De façon avantageuse, la partie supérieure de cette porte 33 présente un biseau intérieur 330 qui définit une rampe inclinée, facilitant l'introduction de l'objet O sur le fond 30.

De préférence, la porte 33 présente des moyens de verrouillage 35, qui coopèrent avec les deux parois latérales 32a et 32b, afin de la maintenir en position fermée verticale, pendant le déplacement de la plateforme support 3.

La plateforme 3, avec son fond 30, sa paroi arrière 31, ses parois latérales 32a, 32b et sa porte 33, forme une cage qui se déplace à l'intérieur du puits 24.

De préférence également, l'une des parois verticales de la plateforme 3 peut présenter des moyens d'immobilisation de l'objet O, (non représentés), afin d'éviter tout déplacement intempestif de celui-ci pendant le déplacement du véhicule 1.

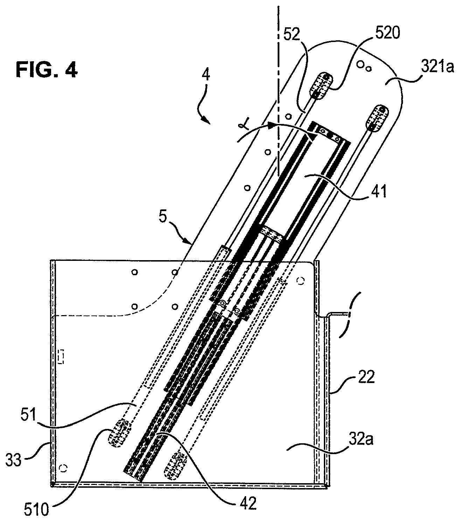

Un mode possible de réalisation des moyens de guidage 4 va maintenant être décrit en faisant référence aux figures 2 à 4. Ces moyens de guidage 4 permettent de guider le déplacement de la plateforme 3, par rapport au châssis 2, entre une position dite "basse" et une position dite "haute" de ladite plateforme et inversement.

De préférence, des moyens de guidage 4 identiques sont disposés de part et d'autre des deux côtés de la plateforme 3. Seul l'un d'entre eux sera décrit ici plus en détail.

Le moyen de guidage 4 comprend une glissière 41, à l'intérieur de laquelle un coulisseau mobile 42 est guidé en translation. L'un de ces éléments est fixé au châssis 2 et l'autre à la plateforme support 3.

De préférence, la glissière 41 est fixée sur la face extérieure de l'aile 321a tandis que le coulisseau 42 est fixé sur la face intérieure de la paroi latérale 23a.

La glissière 41 et coulisseau 42 sont ainsi inclinés d'un angle α par rapport à la verticale, compris entre 0° et 60°, de préférence de l'ordre de 30°, cette inclinaison permettant d'écarter progressivement la pilonneuse du châssis du véhicule pendant son mouvement de descente pour que sa partie arrière en surplomb ne le heurte pas.

Pour déplacer une machine de forme différente, la glissière 41, le coulisseau 42 et les ailes 321a, 321b pourraient être orientés verticalement.

Ainsi, le déplacement de la cage de la plateforme 3 par rapport au châssis 2 s'effectue selon un mouvement ascendant ou descendant, soit vertical, soit proche de la verticale selon la forme de l'appareil à manutentionner.

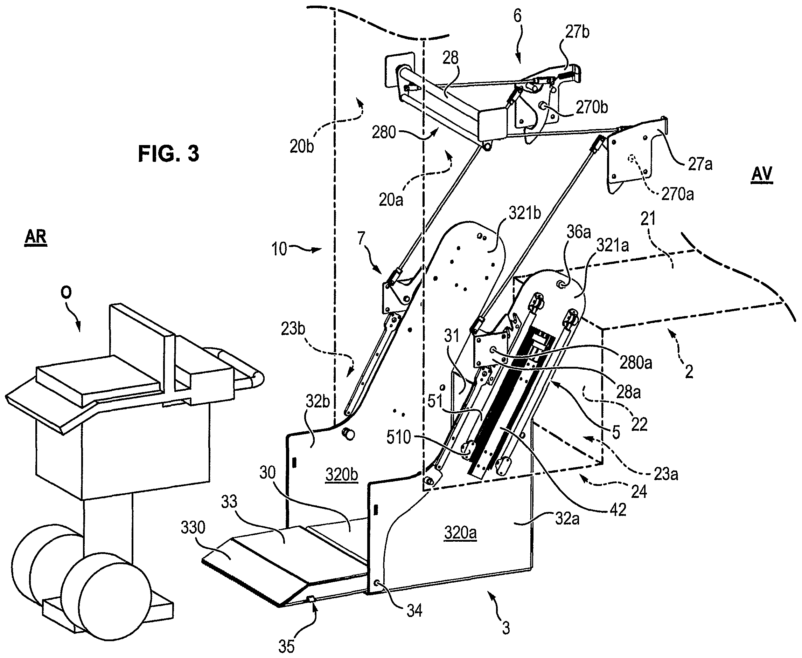

Lorsque la plateforme 3 est dans la position basse, représentée sur les figures 1 et 3, son fond 30 se trouve au niveau du sol S ou sensiblement au niveau du sol S, (c'est-à-dire à faible distance de celui-ci), de sorte qu'un opérateur peut y charger ou décharger l'objet O. Lorsque la plateforme 3 est à faible distance du sol, la porte basculante 33 peut pivoter davantage vers le sol pour rattraper l'écart de niveau entre le sol S et le fond 30 et faciliter le transfert de l'objet O sur le fond 30 à partir du sol S et réciproquement.

Lorsque la plateforme 3 est dans la position haute, représentée sur la figure 2, elle est à une altitude supérieure à celle de la position basse. Elle se trouve alors à un niveau qui permet le déplacement du véhicule. Dans cette position haute, le fond 30 est soit à la même hauteur que le plancher du véhicule 1, ce qui peut permettre de déplacer l'objet O jusqu'à l'intérieur de ce dernier, soit à une position légèrement inférieure au plancher. Dans ce dernier cas, l'objet O reste alors en place sur le fond 30, sans pouvoir être déplacé à l'intérieur du véhicule.

On notera que la glissière 41 et le coulisseau 42 sont préférentiellement fixés respectivement sur la plateforme 3 et sur le châssis 2, de façon que le coulisseau soit complètement rentré dans la glissière, lorsque la plateforme 3 est en position basse (voir figure 3) et qu'inversement le coulisseau 42 soit sorti au maximum de la glissière 41, lorsque la plateforme 3 est en position haute, (voir figure 2). Ceci est une sécurité pour le cas où l'opérateur viendrait à déplacer malencontreusement le véhicule 1, alors que la plateforme 3 est en position basse. Dans cette position, ces deux éléments des moyens de guidage 4 sont ainsi plus résistants à d'éventuelles déformations.

Une variante possible de réalisation des moyens 6 de verrouillage de la plateforme 3 en position haute va maintenant être décrite en liaison avec les figures 2, 3 et 5.

De préférence, ces moyens de verrouillage comprennent deux crochets 60a, 60b, montés pivotants respectivement par rapport aux flancs latéraux 20a, 20b, ces crochets, dénommés "premiers crochets", étant disposés horizontalement l'un en face de l'autre.

Ces premiers crochets et leurs organes d'actionnement étant identiques, un seul d'entre eux 60a sera maintenant décrit en détail, les éléments identiques du crochet 60b portant les mêmes références numériques majorées du signe "b".

Le crochet 60a est constitué d'une plaque mince présentant trois lobes disposés autour d'un orifice central 61a.

Le crochet 60a est monté pivotant autour d'un axe 270a solidaire du flanc 20a du châssis et qui s'étend au travers de l'orifice 61a.

L'un des lobes constitue une extrémité 62a recourbée de bas en haut et vers l'arrière et apte à coopérer avec un doigt de verrouillage 36a fixé sur la face extérieure de l'aile 321a.

Un deuxième lobe situé sensiblement à l'opposé de l'extrémité 62a par rapport à l'orifice 61a constitue une extrémité de commande 63a, sur laquelle il est possible d'agir pour faire pivoter le crochet 60a, autour d'un axe 270a solidaire d'une platine 27a, elle-même fixée sur la face intérieure du flanc 20a. Le crochet 60a peut ainsi pivoter dans une position de verrouillage (sens horaire), dans laquelle il retient le doigt 36a et à l'inverse dans une position de déverrouillage (sens antihoraire), dans laquelle il le libère.

De préférence, ces moyens de verrouillage 6 sont des moyens de verrouillage automatique. A cet effet, l'extrémité de commande 63a est reliée, d'une part, à un ressort de rappel 64a, et d'autre part, de façon articulée, à un organe d'actionnement 65a, ici une biellette, qui agit en sens inverse du ressort 64a. L'autre extrémité du ressort de rappel 64a est fixée sur la platine 27a.

Par ailleurs, une barre de préhension 28, (voir figures 2 et 3), à laquelle l'opérateur peut s'accrocher, est montée horizontalement entre les deux flancs 20a et 20b, perpendiculairement à ceux-ci, et à faible distance vers l'arrière par rapport auxdits premiers crochets de verrouillage 60a et 60b.

Une poignée d'actionnement 280 est montée pivotante aux deux extrémités de cette barre 28.

La poignée d'actionnement 280 comprend une tige 281 horizontale aux deux extrémités de laquelle sont fixées deux pattes 282a, 282b perpendiculaires. Ces pattes sont montées pivotantes à leur extrémité libre autour de la barre 28. En outre, les biellettes 65a, 65b sont fixées respectivement à ces deux pattes 282a, 282b, par une liaison articulée.

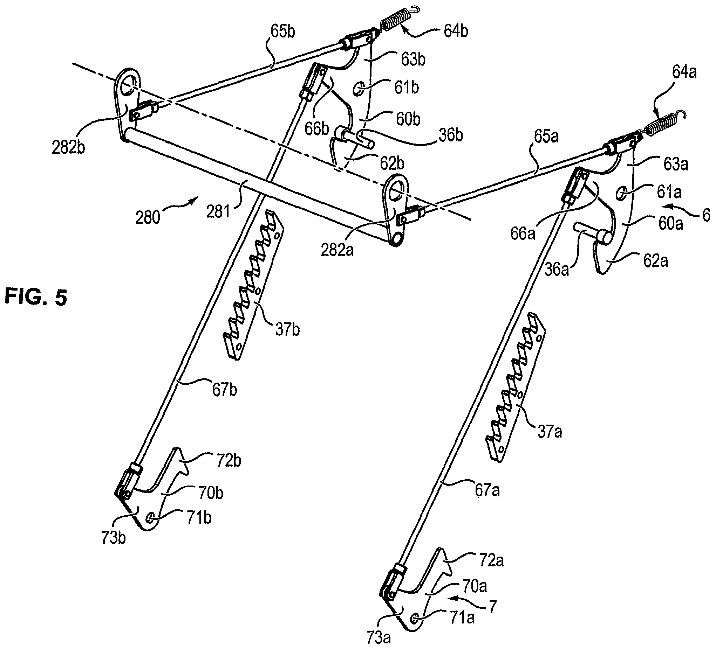

Lorsque l'opérateur tire sur la tige 281, (vers la gauche de la figure 5), il la fait pivoter dans le sens horaire, ce qui a pour effet d'exercer une traction sur les deux biellettes 65a et 65b qui, à leur tour, font pivoter les crochets 60a et 60b dans leur position de déverrouillage, à l'encontre de la force de rappel des ressorts 64a et 64b. Inversement, lorsque l'opérateur relâche la tige 281, les ressorts 64a et 64b rappellent les crochets dans leur position de verrouillage.

Enfin, le troisième lobe du crochet 60a définit une troisième extrémité 66a disposée entre les deux extrémités recourbées 62a et de commande 63a.

Une biellette ou tringle 67a est fixée à ses deux extrémités, de manière articulée, d'une part à l'extrémité 66a du premier crochet 60a et d'autre part, à une extrémité 73a d'un deuxième crochet 70a qui constitue l'un des moyens de verrouillage 7 de la plateforme 3 en position basse. Cette tringle 67a assure la liaison cinématique entre les deux crochets, et donc leur mouvement simultané.

Une variante possible de réalisation des moyens 7 de verrouillage de la plateforme 3 en position basse, qui coopèrent avec les moyens de verrouillage 6 de la plateforme en position haute, va maintenant être décrite en liaison avec les figures 2, 3 et 5.

De préférence, ces moyens de verrouillage comprennent également un autre deuxième crochet 70b identique au crochet 70a et dont les parties constitutives portent les mêmes références numériques majorées de la lettre "b".

Le deuxième crochet 70a est percé d'un orifice 71a autour duquel il est monté pivotant autour d'un axe 280a solidaire d'une platine 28a, elle-même fixée sur la face intérieure du châssis 2, plus précisément du flanc 20a. Le crochet 70a présente deux lobes s'étendant sensiblement à angle droit l'un de l'autre, l'un définissant une extrémité 72a recourbée vers le bas et vers l'avant, et l'autre l'extrémité de commande 73a précitée.

L'extrémité 72a est apte à coopérer avec les dents d'une crémaillère 37a fixée sur la face extérieure de l'aile oblongue 321a de la plateforme 3. Cette crémaillère 37a s'étend parallèlement à la glissière 41.

Lorsque la plateforme 3 est en position basse, comme représenté sur la figure 3, le crochet 70a et plus particulièrement son extrémité recourbée 72a se trouvent à proximité de la crémaillère 37a. Le ressort de rappel 64a, via la tringle 67a tend en permanence à faire pivoter le crochet 70a dans sa position de verrouillage, dans laquelle son extrémité 72a coopère avec l'une des dents de la crémaillère 37a. Lorsque l'opérateur tire sur la tige 281 il amène également le crochet 70a dans sa position de déverrouillage.

D'autres modes de réalisation des moyens de verrouillage 7 en position basse sont également envisageables.

D'une manière générale, le dispositif à déformation élastique 5 comprend une partie fixe liée mécaniquement au châssis 2 et une partie déformable élastiquement ou mobile élastiquement, liée mécaniquement à la plateforme 3 mobile.

Ce dispositif 5 est apte à se déformer sous l'action de la force (poids) que l'opérateur et/ou l'objet O exerce sur le dispositif 5 du fait de sa masse et de sa position dans le champ de pesanteur.

Dans une première phase, pendant sa montée jusqu'à la plateforme 3 en position haute, sur laquelle il prend place, l'opérateur augmente son énergie potentielle dans le champ de la gravitation terrestre. Dans une deuxième phase, le dispositif 5 est capable d'accumuler cette énergie potentielle, fournie par au moins un opérateur monté sur la plateforme mobile 3 lorsqu'elle est en position haute et/ou fournie par l'objet O placé sur cette plateforme mobile pendant le mouvement descendant de la plateforme 3 jusqu'à la position basse.

Dans une troisième phase, ce dispositif à déformation élastique 5 est ensuite capable de restituer cette énergie potentielle de façon sensiblement constante et avec une vitesse contrôlée, à ladite plateforme mobile 3 pour assurer, en totalité ou partiellement en accompagnement d'une autre force motrice complémentaire, le mouvement ascendant de celle-ci.

Un mode de réalisation possible du dispositif à déformation élastique 5 va maintenant être décrit en faisant référence aux figures 2 à 4.

Il s'agit d'un vérin à gaz (ou ressort à gaz) 50 comprenant un corps 51 étanche contenant un gaz comprimé et de l'huile, un piston et une tige 52.

L'extrémité libre 510 du corps 51 est fixée au châssis 2, plus précisément sur la face intérieure de la paroi latérale 23a du puits 24.

L'extrémité libre 520 de la tige 52 est, quant à elle, fixée à la plateforme 3 et, plus précisément, sur la face extérieure de la partie oblongue 321a de la cage.

De préférence, il y a un vérin à gaz 50 de chaque côté de la plateforme 3, de préférence encore deux de chaque côté, comme représenté sur les figures, et ce, pour des raisons de sécurité afin de parer à une éventuelle défaillance mécanique de l'un d'eux.

On notera, comme on peut le voir sur la figure 2, que le ou les vérins à gaz 50 sont parallèles à la glissière 41 et au coulisseau 42. La trajectoire de la plateforme 3 (coulissement) est rectiligne et parallèle au(x) corps du ou des vérins à gaz 50. Cette disposition géométrique assure la constance de la poussée.

Le ressort à gaz 50 est avantageusement un ressort de poussée, c'est-à-dire que sa position au repos est celle dans laquelle la tige est sortie (voir figure 2).

Sous l'action d'une force exercée sur la tige 52, (poids de l'utilisateur), celle-ci va rentrer à l'intérieur du corps 51 en comprimant le gaz qui s'y trouve. Cette descente de la tige 52 entraine le mouvement descendant de la plateforme 3 à laquelle elle est liée. Le vérin 50 contient comprend avantageusement un dispositif d'amortissement interne limitant sa vitesse de rentrée.

Le vérin à gaz 50 est paramétré de façon que sa force résistante dans le sens vertical descendant soit égale ou légèrement inférieure ou légèrement supérieure à la force créée, sur les glissières, par le poids de la plateforme 3 et de l'objet O. Dans le cas où le monte-charge conforme à l'invention est dédié à la manutention d'un objet O précis, par exemple ici la pilonneuse, cet objet a un poids connu et l'ajustement précité est aisé. On verra ultérieurement, dans un autre mode de réalisation, que lorsque le monte-charge est destiné à déplace des objets différents, donc de poids différents, certains ajustements peuvent être nécessaires.

Lorsque l'on remplace l'opérateur par l'objet O sur la plateforme 3 en position basse, si la force verticale ascendante du vérin 50 accumulateur d'énergie potentielle est supérieure au poids de l'objet O, alors la plateforme 3 remonte seule de façon lente. Si la force verticale ascendante du vérin 5 accumulateur d'énergie potentielle est légèrement inférieure au poids de l'objet O, alors l'opérateur devra exercer une force musculaire complémentaire pour accompagner le mouvement ascendant de la plateforme 3 jusqu'à sa position haute. Toutefois, cette force musculaire complémentaire sera de faible intensité.

D'autres dispositifs à déformation élastique 5 pourraient être utilisés, tels que ressorts spirales ou à barre de torsion ou éléments de caoutchouc, par exemple.

Cette force musculaire complémentaire peut être appliquée soit de façon directe par l'opérateur qui soulève la plateforme 3, soit à l'aide d'un dispositif de levage complémentaire.

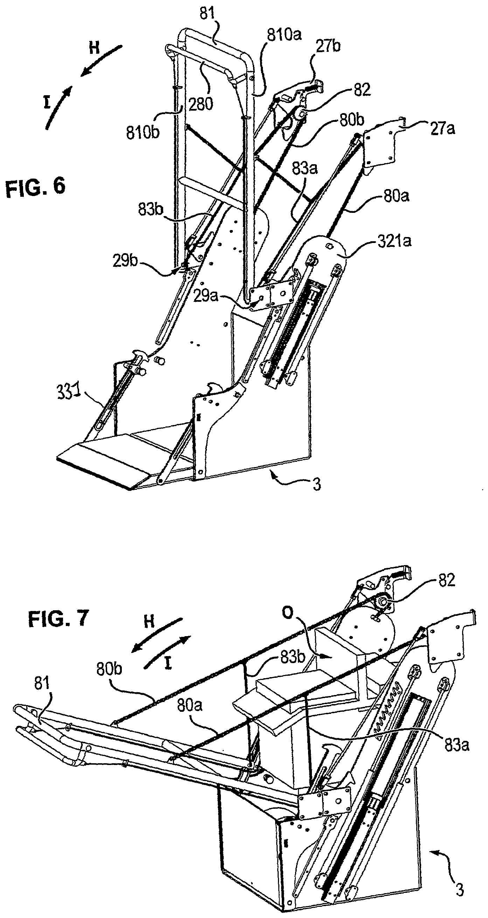

Un exemple d'un dispositif de levage complémentaire 8 va maintenant être décrit plus en détails en lien avec les figures 6 et 7.

Le dispositif 8 comprend deux chaines ou câbles de transmission 80a, 80b dont une extrémité est fixée à l'aile 321a, respectivement 321b, de la plateforme 3 et l'autre à l'une des branches 810a, respectivement 810b d'un levier de commande 81 en U inversé.

Ce levier de commande 81 est monté pivotant, à ses extrémités libres inférieures, autour d'axes 29a, respectivement 29b, ménagés sur des platines solidaires du châssis 2.

En outre, chaque chaine de transmission 80a, 80b engrène sur un pignon, monté rotatif sur la platine 27a, 27b. Un seul pignon, référencé 82 est visible sur les figures. Ce pignon est placé plus haut que l'extrémité des ailes 321a, 321b.

De façon avantageuse, des ressorts 83a, 83b maintiennent les chaines 80a, 80b en état de tension permanente.

Dans ce mode de réalisation, la poignée d'actionnement 280 est avantageusement supportée par le levier de commande 81 en lieu et place de la barre 28.

Lorsque l'opérateur souhaite exercer une force musculaire d'accompagnement du déplacement de la plateforme 3, il peut tirer sur le levier 81 (flèche H), ce qui a pour effet de déplacer la plateforme 3 dans le sens ascendant ou au contraire relâcher cette traction (flèche I), ce qui a pour effet de déplacer la plateforme 3 dans le sens descendant.

Le fonctionnement du monte-charge 10 conforme à l'invention va maintenant être décrit en faisant référence aux figures 2, 3 et 5 et en considérant que l'objet O est une pilonneuse.

Au départ, la pilonneuse C se trouve sur la plateforme 3 en position haute.

L'opérateur tire sur les deux verrous de sécurité qui bloquent le coulissement de la plateforme par rapport au châssis 2 (non décrits) puis actionne la poignée d'actionnement 280 de façon à libérer les doigts de verrouillage 36a, 36b. La plateforme 3 se met alors à descendre sous le poids de la pilonneuse si les vérins 5 exercent une force ascendante plus faible que la force verticale descendante de la gravité. Dans le cas contraire, l'opérateur exerce directement sur la plateforme 3 et/ou sur l'objet O, soit un effort musculaire complémentaire pour la (les) faire descendre, soit monte préalablement sur la porte 33 de la plateforme 3 pour apporter le poids complémentaire manquant.

Dans ce dernier cas, pour ce faire il actionne le verrou 35 de la porte 33 et fait basculer celle-ci horizontalement vers l'extérieur. La porte 33 est avantageusement retenue en position horizontale par des tirants coulissants 331 (voir figure 6).

L'opérateur relâche alors la pression exercée sur la poignée d'actionnement 280, ce qui a pour effet de réarmer les deux premiers crochets de verrouillage 60a, 60b et les deux deuxièmes crochets 70a, 70b.

Le mouvement de descente de la plateforme 3 s'arrête lorsque cette dernière atteint soit le niveau du sol, soit la fin de course mécanique de position basse du coulisseau 42 par rapport à la glissière 41, soit la fin de course des vérins à gaz 50. Les crochets de verrouillage 70a, 70b s'enclenchent alors automatiquement dans les crémaillères 37a, 37b. On notera que la hauteur de la position de verrouillage en position basse de la plateforme 3 est égale ou juste supérieure à la position d'arrêt de cette plateforme au contact du sol ou en fin de course mécanique.

L'opérateur peut alors actionner le verrou 35 de la porte 33 et faire basculer celle-ci horizontalement vers l'extérieur.

Il libère la pilonneuse C en actionnant le verrou de sécurité qui la maintenait dans la cage de la plateforme 3 et peut déplacer celle-ci vers l'extérieur.

Lorsque l'opérateur souhaite faire remonter la plateforme 3 à vide, il referme la porte 33 et actionne la poignée 280 de façon à libérer les crochets 70a, 70b hors des crémaillères.

Si nécessaire, il exerce son poids sur la plateforme 3 en introduisant son pied dans une échancrure ménagée à la base de la porte, de façon à libérer les dents des crémaillères de l'extrémité recourbée 72a, 72b des crochets 70a, 70b.

La plateforme 3 commence alors son mouvement ascendant sous la poussée des ressorts à gaz 50 et maitrisée sous l'effet de leurs amortisseurs internes.

L'opérateur maintient la poignée 280 en position de déverrouillage des crochets 70a, 70b jusqu'à mi-course environ, c'est-à-dire après que les crémaillères 37a, 37b ne soient plus en correspondance des crochets 70a, 70b, afin d'éviter leur ré-enclenchement intempestif.

Arrivée en position haute, la plateforme 3 se verrouille automatiquement sous l'action des crochets de verrouillage 60a, 60b. Sous l'action des ressorts 64a, 64b, les crochets 60a et 60b s'écartent automatiquement au passage des doigts de verrouillage 36a, 36b puis se referment. Les doigts 36a, 36b ne restent pas en appui contre les crochets 60a, 60b car, la plateforme 3 étant vide, les ressorts à gaz 50 se maintiennent en butée de leur propre fin de course mécanique (position détendue).

Lorsque l'opérateur souhaite ensuite charger de nouveau la pilonneuse dans le véhicule, il commence par faire descendre la plateforme 3 à vide au niveau du sol.

Pour ce faire, il monte sur la plateforme 3 puis actionne la poignée 280 de façon à déverrouiller le moyen de verrouillage haut 60a, 60b, la plateforme 3 descend alors sous le poids de l'opérateur. Dans le cas où le poids de l'opérateur est insuffisant pour faire descendre la plateforme, ce dernier peut prendre avec lui une charge complémentaire ou exercer une force musculaire descendante complémentaire ou faire appel à un deuxième opérateur qui exercera également son poids sur la plateforme.

Les ressorts à gaz 50 se compriment et accumulent l'énergie potentielle de l'opérateur pendant la descente de la plateforme 3.

Lorsque le monte-charge arrive en position basse, l'opérateur relâche la poignée 280, ce qui a pour effet d'enclencher les crochets 70a, 70b dans les dents des crémaillères 37a, 37b correspondantes.

L'opérateur sort de la plateforme, les ressorts à gaz se détendent légèrement et la plateforme 3 remonte également légèrement, ce qui a pour effet de renforcer le verrouillage des crochets 70a, 70b dans les dents des crémaillères.

L'opérateur peut alors placer la pilonneuse C sur la plateforme dont la porte est ouverte, refermer la porte et déverrouiller les moyens de verrouillage 7 de la plateforme en position basse.

Les ressorts à gaz 50 restituent l'énergie qu'ils ont accumulée pendant la descente précédente, ce qui a pour effet de provoquer le mouvement ascendant de la plateforme. La plateforme 3 se verrouille alors automatiquement en position haute.

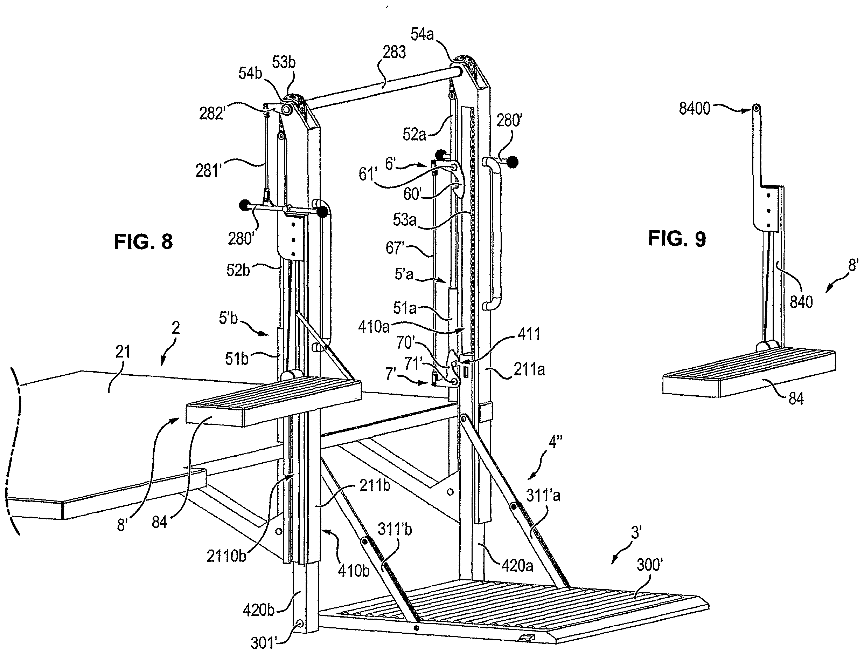

Une autre variante de réalisation du monte-charge conforme à l'invention va maintenant être décrite en faisant référence aux figures 8 et 9.

Cette variante diffère de la précédente tout d'abord en ce que la plateforme, référencée 3', se déploie depuis l'intérieur du véhicule jusqu'à une position horizontale extérieure au véhicule 1.

La plateforme 3' comprend un plateau 300' monté pivotant par rapport à deux montants verticaux 420a, 420'b.

Le déploiement du plateau 300' peut se faire par basculement autour d'un axe 301' d'une position verticale ne dépassant pas les contours extérieurs du véhicule à une position horizontale en débordement du véhicule, comme présenté sur le schéma joint, et ce, grâce à des compas d'ouverture/fermeture 311'a, 311'b qui relient le plateau 300' aux montants 420a, 420b.

Le déploiement peut également se faire par coulissement dans un plan horizontal de l'intérieur du véhicule vers l'extérieur, la marchandise pouvant alors rester sur la plateforme lorsqu'elle est en position rentrée sur ou dans le véhicule. Le jeu d'axes 301' est alors remplacé par un jeu de double galets (non représentés) lié par un support aux montants verticaux 420a et 420b et coulissant chacun dans une glissière disposée sur les tranches latérales extérieures de la plateforme.

Les montants 420a, 420b constituent la partie mobile (coulisseau) d'au moins une glissière verticale ou sensiblement verticale 410a, 410b d'un dispositif de guidage en déplacement 4" de la plateforme 3' par rapport au châssis 2. Ces glissières 410a, 410b sont ménagées sur les faces intérieures (en regard l'une de l'autre) de colonnes 211a, 211b, solidaires du châssis 2.

Chaque coulisseau mobile 420a, 420b est lié mécaniquement à une première extrémité élastique d'un dispositif à déformation élastique ou à sa partie mobile élastiquement, ici respectivement à l'extrémité libre de la tige 52a, 52b d'un vérin à gaz 5'a, 5'b. Il s'agit de préférence de vérins à gaz dit "de traction", dont la tige est rentrée dans le corps au repos. Cette liaison s'effectue par une chaine 53a, respectivement 53b. Les deuxièmes extrémités des dispositifs élastiques 5'a, 5'b, (à savoir les corps 51a, 51b des vérins) sont fixées au châssis 2 du véhicule.

Les vérins 5'a, 5'b sont disposés verticalement ou sensiblement verticalement, parallèlement aux glissières 410a, 410b et aux coulisseaux 420a, 420b.

Chaque chaine 53a, 53b engrène respectivement avec un pignon 54a, 54b, monté rotatif à l'extrémité supérieure des colonnes fixes 211a, 211b. Ainsi, un mouvement descendant des tiges 52a, 52b provoque respectivement un mouvement ascendant des coulisseaux 420a, 420b et inversement.

Le dispositif de verrouillage 6' de la plateforme en position haute et le dispositif de verrouillage 7' de la plateforme en position basse sont assez similaires aux dispositifs de verrouillage 6 et 7 précédemment décrits et seront décrits plus succinctement. Ces dispositifs de verrouillage sont prévus sur les deux colonnes fixes 211a, 211b.

Le dispositif 6 comprend un crochet pivotant 60' et le dispositif 7', un crochet pivotant 70'. Un axe 61' est monté pivotant dans un palier horizontal de la colonne 211a et relie rigidement le crochet 60' à une poignée d'actionnement 280' placée de l'autre côté de la colonne 211a. L'axe 71' de chaque crochet 70' est constitué d'une barre de torsion réalisant automatiquement son rappel en position verrouillée. L'extrémité de la barre de torsion côté crochet 70' pivote dans un palier et son extrémité opposée est fixée rigidement à la colonne 211a, respectivement 211b.

Les crochets 60', 70' peuvent coopérer avec un doigt de verrouillage 411 fixé sur les montants 420a, 420b de la plateforme 3'. Les deux crochets 60', 70' sont reliés entre eux par une tringle 67' qui synchronise leurs mouvements de verrouillage ou de déverrouillage.

Un tube creux 283 relie les pignons 54a, 54b des deux colonnes de guidage 211a, 211b pour synchroniser les mouvements verticaux des coulisseaux 420a et 420b.

Un axe de liaison non visible, placé dans le tube creux 283, relie des pattes droite et gauche 282' et, par des biellettes 281', transmet le mouvement à la poignée d'actionnement 280' à celle placée de l'autre côté, qui elle-même actionne le jeu de crochet de verrouillage 6', 7' auquel elle est liée mécaniquement par l'axe 61'. L'opérateur peut ainsi agir indifféremment sur la poignée 280' droite ou gauche pour commander le déverrouillage position haute ou position basse de la plateforme.

Le dispositif à déformation élastique 5'a, 5'b utilisé est dimensionné pour pouvoir accumuler l'énergie potentielle du champ de la pesanteur d'au moins un opérateur et/ou de l'objet pendant la descente de la plateforme 3' d'une position haute verrouillée verticalement à une position basse également verrouillée verticalement.

La force de poussée verticale de ce dispositif à déformation élastique est dimensionnée en fonction du poids de la plateforme, du poids de l'objet O à monter dans le véhicule, ainsi que du poids d'un ou de plusieurs opérateurs.

Le sens du mouvement est déterminé par la force résultante de deux forces antagonistes : la poussée verticale ascendante du dispositif élastique accumulateur d'énergie potentielle 5'a, 5'b d'une part et la poussée verticale descendante engendrée par le poids de la plateforme 3' et de la charge constituée d'au moins un opérateur et/ou de l'objet O à descendre du véhicule ou à monter à bord du véhicule.

### EXEMPLE DE REALISATION

Dans cet exemple, le poids de la plateforme 3' a volontairement été négligé pour simplifier l'exposé.

La poussée verticale ascendante du dispositif à déformation élastique accumulateur d'énergie potentielle 5'a, 5'b est de 1000N.

L'opérateur pèse 70 kg. Il souhaite charger un objet d'un poids de 80 kg sur ou dans le véhicule, il doit d'abord faire pivoter la plateforme 3' vers l'extérieur puis la faire descendre. Pour cela, il monte dans ou sur le véhicule 1. En élevant son corps avec facilité grâce à un excellent rendement énergétique naturel, l'opérateur augmente son énergie potentielle dans le champ de la pesanteur.

Dans une deuxième étape, il va restituer cette énergie potentielle au dispositif élastique d'accumulation d'énergie 5'a, 5'b, de la façon suivante : il s'installe sur la plateforme avec une ou plusieurs charges unitaires complémentaires d'un total de 20 kg, formant une masse totale de 110 kg. L'opérateur peut également faire monter un deuxième opérateur.

Il actionne le dispositif de verrouillage en position haute 6' pour le libérer. La plateforme 3' descend sous l'effet du poids de l'opérateur jusqu'à son verrouillage automatique en position basse 7'.

L'opérateur positionne ensuite l'objet O sur la plateforme 3' et débloque les moyens de verrouillage 7' en position basse.

Dans une troisième étape, la plateforme 3' remonte sous l'action du dispositif élastique 5'a, 5'b dont la poussée de 1000N est supérieure au poids de 80 kg de l'objet.

Pour descendre du véhicule un objet pesant 50 kg l'opérateur, qui pèse 70 kg, monte sur la plateforme 3' en position haute, à côté de l'objet à descendre. L'ensemble représente une masse de 120 kg dont la force gravitationnelle descendante est supérieure à la poussée ascendante de 1000N du dispositif élastique d'accumulation 5'a, 5'b. L'opérateur libère le dispositif de verrouillage en position haute de la plateforme. Celle-ci, libérée verticalement, descend de façon amortie jusqu'au sol. La plateforme 3' se verrouille automatiquement en position basse. L'opérateur enlève l'objet de la plateforme. Il peut ensuite faire remonter cette dernière libre de toute charge, sous l'effet de la poussée permanente du dispositif élastique à vitesse amortie jusqu'à son verrouillage automatique en position haute, la poussée du dispositif étant supérieur au poids à vide de la plateforme 3'.

L'opérateur peut également monter sur la plateforme qui le ramène alors au niveau du plancher du véhicule.

### Cas du chargement d'une marchandise d'un poids supérieur à 100 kg

Si l'objet pèse un poids juste supérieur à la poussée du dispositif élastique, exemple 120 kg, l'opérateur peut exercer un effort musculaire ascendant de 20 kg directement sur la plateforme 3' ou sur l'objet.

Si l'objet à charger sur ou dans le véhicule pèse 150 kg, les 1000 N de poussée verticale du dispositif élastique 5'a, 5'b vont s'avérer insuffisants et l'effort musculaire trop important. Dans ce cas, il est nécessaire d'utiliser un dispositif de levage complémentaire.

Un exemple de réalisation de ce dispositif de levage 8' est représenté sur les figures 8 et 9.

Ce dispositif 8' comprend un marchepied 84 monté coulissant sur l'une des colonnes, ici la colonne 211b. Le marchepied 84 est solidaire d'une platine 840 qui coulisse dans une glissière 2110b prévue sur la face extérieure de la colonne 211b.

L'extrémité supérieure 8400 de la platine 840 est liée mécaniquement au brin descendant de la chaîne 53b dont le brin montant tire la plateforme 3' vers le haut, le pignon 54b placé en haut de la colonne 211b effectuant un renvoi du mouvement à 360°.

De préférence, le marchepied 84 est repliable vers le haut.

Après avoir installé l'objet O sur la plateforme 3' en position basse, l'opérateur monte à nouveau sur ou dans le véhicule élevant une deuxième fois son énergie potentielle. Il apporte alors la force ascendante complémentaire d'environ 700 N en montant sur le marchepied 84. La plateforme 3' peut alors monter avec sa charge de 150 kg dont la force gravitationnelle est inférieure à la traction ascendante totale de 1700 N.

### VARIANTES DE REALISATION.

Dans les différents modes de réalisation qui viennent d'être décrits, on notera que les dispositifs de verrouillage 6, 6' en position haute, ou 7, 7' en position basse pourraient être remplacés par un dispositif de blocage du vérin à gaz.

Un tel dispositif comprend une soupape mobile qui obstrue l'orifice du piston du vérin, ce qui bloque ce dernier en position car le fluide ne peut alors plus passer d'une chambre à l'autre. Cette soupape est actionnée par un levier ou câble de commande depuis l'extérieur du vérin par l'intermédiaire d'une tige qui coulisse dans la tige du piston.

Il est également possible de prévoir des dispositifs d'ajustement de la force de poussée exercée par le ou les dispositifs à déformation élastique 5, 5'a, 5'b.

La force de poussée peut par exemple être adaptée en utilisant des moyens permettant de soustraire ou d'ajouter du fluide dans l'enceinte du vérin.

Dans le cas où le dispositif à déformation élastique 5, 5'a, 5'b est constitué de plusieurs dispositifs élastiques élémentaires formant un ensemble assurant une poussée maximale de la plateforme de bas en haut le long de sa glissière, un dispositif mécanique simple permet de soustraire une ou plusieurs extrémités d'au moins un dispositif élastique élémentaire de son point d'accrochage à la partie mobile de la plateforme 3', de façon à pouvoir réduire la poussée verticale ascendante à la valeur nécessaire qui est fonction du poids de l'objet à lever. En d'autres termes, on sélectionne le ou les dispositifs qui fonctionnent.

Enfin, la poussée du dispositif à déformation élastique peut être ajustée en utilisant un levier à longueur de bras variable. Dans ce cas, la pleine force de poussée du dispositif à déformation élastique s'exerce sur la plateforme par l'intermédiaire d'un levier à longueur de bras variable permettant de réduire la force transmise. Ce dispositif de réduction de poussée du dispositif élastique permet à l'opérateur d'assurer la descente de la plateforme lorsque l'objet, qui y est placé, possède une masse insuffisante pour vaincre la pleine poussée du dispositif élastique.

## Revendications

1. Véhicule (1), notamment véhicule utilitaire, équipé d'un monte-charge (10) configuré pour déplacer un objet (O), telle qu'une machine de chantier, du sol vers l'intérieur du véhicule et inversement, ce monte-charge (10) comprenant :
- un châssis fixe (2) solidarisé audit véhicule,
- une plateforme (3, 3') support dudit objet (O), mobile par rapport audit châssis (2), selon un mouvement ascendant, entre une position, dite "basse", dans laquelle elle est au niveau du sol ou sensiblement au niveau du sol, de façon à autoriser le chargement ou le déchargement dudit objet (O) depuis ou vers le sol par un opérateur, et une position, dite "haute", et inversement selon un mouvement descendant,
- au moins un moyen de guidage (4, 4") en déplacement de ladite plateforme (3, 3') par rapport audit châssis (2),
- au moins un moyen de verrouillage (6, 6') de ladite plateforme en position haute,
- au moins un moyen de verrouillage (7, 7') de ladite plateforme en position basse,
- au moins un dispositif à déformation élastique (5, 5'a, 5'b), dont une partie fixe (51, 51a, 51b) est liée mécaniquement audit châssis (2) et dont une partie (52, 52a, 52b) déformable élastiquement ou mobile élastiquement est liée mécaniquement à ladite plateforme mobile (3, 3'),
ce monte-charge (10) étant **caractérisé en ce que** ledit moyen de guidage en déplacement (4) comprend une glissière (41, 410a, 410b) et un coulisseau (42, 420a, 420b) dont l'un est solidaire de ladite plateforme mobile (3, 3') et l'autre solidaire du châssis (2), de façon à réaliser un mouvement de translation de la plate-forme par rapport audit châssis, dans un sens vertical ou sensiblement vertical entre lesdites positions basse et haute de la plateforme (3, 3'),
et **en ce que** le dispositif à déformation élastique (5, 5'a, 5'b) est configuré pour :
- accumuler, pendant le mouvement de translation descendant de la plateforme (3, 3') jusqu'à sa position basse, l'énergie potentielle du champ de la pesanteur fournie préalablement par au moins un opérateur monté sur la plateforme mobile (3, 3') lorsqu'elle est en position haute ou fournie préalablement par au moins un opérateur monté sur la plateforme mobile (3, 3') et par l'objet (O) placé sur la plateforme mobile lorsque celle-ci est en position haute,
- contrôler la vitesse de descente de la plateforme mobile,
- restituer cette énergie potentielle accumulée, d'une façon sensiblement constante et avec une vitesse contrôlée, à ladite plateforme mobile (3, 3'), pour assurer, en totalité, le mouvement ascendant de celle-ci.

2. Véhicule selon la revendication 1, **caractérisé en ce que** le dispositif à déformation élastique (5, 5'a, 5'b) est un vérin à gaz dont la poussée est sensiblement constante et la vitesse contrôlée et qui comprend un corps (51, 51a, 51b) et une tige mobile (52, 52a, 52b) dont l'un est solidaire de la plateforme (3, 3') et l'autre est solidaire du châssis (2).

3. Véhicule selon la revendication 2, **caractérisé en ce que** ledit vérin à gaz est configuré pour présenter une force ascendante supérieure au poids de la plateforme mobile et de l'objet (O) à déplacer, de façon à assurer en totalité l'ascension autonome de la plateforme (3, 3') avec l'objet.

4. Véhicule selon la revendication 2 ou 3, **caractérisé en ce que** le vérin à gaz est parallèle à la glissière (41, 410a, 410b) et au coulisseau (42, 420a, 420b).

5. Véhicule selon l'une des revendications 2 à 4, **caractérisé en ce que** le vérin à gaz est un ressort de poussée.

6. Véhicule selon l'une des revendications précédentes, **caractérisé en ce que** les moyens de verrouillage de la plateforme en position haute et/ou les moyens de verrouillage de la plateforme (3,3') en position basse comprennent une soupape mobile d'obstruction de l'orifice du piston d'un vérin qui empêche le fluide présent dans le vérin de passer d'une chambre à l'autre de celui-ci.

7. Véhicule selon l'une des revendications précédentes, **caractérisé en ce que** le châssis fixe (2) est équipé d'une barre rigide (28) permettant à l'opérateur de s'y accrocher pour faciliter et sécuriser son ascension sur la plateforme mobile (3), cette barre rigide (28) étant équipée d'au moins une poignée d'actionnement (280) des moyens de verrouillage (6) de la plateforme en position haute et/ou des moyens de verrouillage (7) de la plateforme en position basse.

8. Véhicule selon l'une des revendications précédentes, **caractérisé en ce que** les moyens de verrouillage (6) de la plateforme en position haute comprennent un crochet (60a, 60b, 60'), dit "premier crochet", monté pivotant autour d'un axe (270a, 270b, 61') fixé au châssis (2) et dont l'extrémité recourbée (62a, 62b) est configurée pour coopérer avec un doigt de verrouillage (36a, 36b, 411) solidaire de la plate-forme mobile (3).

9. Véhicule selon la revendication 8, **caractérisé en ce que** les moyens de verrouillage (6) de la plateforme en position haute sont des moyens de verrouillage automatique, **en ce que** le premier crochet (60a, 60b) est équipé d'un ressort de rappel (64a, 64b) qui tend en permanence à le ramener en position verrouillée et **en ce que** lesdits moyens de verrouillage (6) comprennent un organe d'actionnement (280, 65a, 65b) qui permet de faire pivoter ledit premier crochet (60a, 60b) à l'encontre de la force du ressort de rappel (64a, 64b) pour l'amener dans une position déverrouillée dans laquelle il libère ledit doigt de verrouillage (36a, 36b).

10. Véhicule selon l'une des revendications précédentes, **caractérisé en ce que** les moyens de verrouillage (7) de la plateforme en position basse comprennent un crochet (70a, 70b), dit "deuxième crochet", monté pivotant autour d'un axe (28a) fixé au châssis (2) et dont l'extrémité recourbée (72a, 72b) est configurée pour coopérer avec une crémaillère (37a, 37b) solidaire de la plate-forme (3).

11. Véhicule selon la revendication 8 ou 9, **caractérisé en ce que** le les moyens de verrouillage (7) de la plateforme en position basse comprennent un crochet (70a, 70b), dit "deuxième crochet", monté pivotant autour d'un axe (28a) fixé au châssis (2) et dont l'extrémité recourbée (72a, 72b) est configurée pour coopérer avec une crémaillère (37a, 37b) solidaire de la plate-forme (3) et **en ce que** premier crochet (60a, 60b, 60') et le deuxième crochet (70a, 70b, 70') sont liés de façon cinématique, de sorte que leurs placements en position verrouillée ou déverrouillée sont concomitants.

12. Véhicule selon l'une des revendications précédentes, **caractérisé en ce que** la plate-forme (3) est équipée d'au moins un amortisseur permettant de contrôler sa vitesse de montée ou de descente.

13. Véhicule selon l'une des revendications précédentes, **caractérisé en ce qu'**il comprend un dispositif d'ajustement de la force de poussée exercée par le ou les dispositifs à déformation élastique (5, 5'a, 5'b).

## Patentansprüche

1. Fahrzeug (1), insbesondere Nutzfahrzeug, das mit einem Lastenaufzug (10) ausgestattet ist, der so konfiguriert ist, dass er ein Objekt (O), wie zum Beispiel eine Baumaschine, vom Boden aus ins Innere des Fahrzeugs und umgekehrt versetzt, wobei dieser Lastenaufzug (10) Folgendes umfasst:
- ein feststehendes Rahmenwerk (2), das fest mit dem Fahrzeug verbunden ist,
- eine Trägerplattform (3, 3') für das Objekt (O), die gegenüber dem Rahmenwerk (2) mit einer Aufwärtsbewegung zwischen einer sogenannten "unteren" Position, in der sie sich auf Bodenebene oder deutlich auf Bodenebene befindet, damit das Laden oder Abladen des Objekts (O) ab oder auf den Boden durch einen Bediener möglich ist, und einer sogenannten "oberen" Position und umgekehrt in einer Abwärtsbewegung mobil ist,
- zumindest ein Führungsmittel (4, 4") bei der Bewegung der Plattform (3, 3') gegenüber dem Rahmenwerk (2),
- zumindest ein Sperrmittel (6, 6') der Plattform in der oberen Position,
- zumindest ein Sperrmittel (7, 7') der Plattform in der unteren Position,
- zumindest eine elastische Verformungsvorrichtung (5, 5'a, 5'b), von der ein feststehender Teil (51, 51a, 51b) mit dem Rahmenwerk (2) mechanisch verbunden ist, und von der ein elastisch verformbarer oder elastisch mobiler Teil (52, 52a, 52b) mechanisch mit der mobilen Plattform (3, 3') verbunden ist,
wobei dieser Lastenaufzug (10) **dadurch gekennzeichnet ist, dass** das mobile Führungsmittel (4) eine Gleitschiene (41, 410a, 410b) und einen Schieber (42, 420a, 420b) umfasst, von denen die eine fest mit der mobilen Plattform (3, 3') verbunden ist und der andere fest mit dem Rahmenwerk (2) verbunden ist, um eine Translationsbewegung der Plattform gegenüber dem Rahmenwerk in einer senkrechten oder deutlich senkrechten Richtung zwischen der unteren und der oberen Position der Plattform (3, 3') zu erzielen,
und dadurch, dass die elastische Verformungsvorrichtung (5, 5'a, 5'b) so konfiguriert ist, dass sie:
- während der Translationsbewegung der Plattform (3, 3') abwärts bis zu ihrer unteren Position die potenzielle Energie des Schwerefelds sammelt, die zuvor von zumindest einem auf der mobilen Plattform (3, 3') stehenden Bediener bereitgestellt wird, wenn sie in oberer Position ist, oder die zuvor von zumindest einem auf der mobilen Plattform (3, 3') stehenden Bediener und von dem auf die mobile Plattform gestellten Objekt (O) bereitgestellt wird, wenn diese in oberer Position ist,
- die Abstiegsgeschwindigkeit der mobilen Plattform steuert,
- diese gesammelte potenzielle Energie deutlich konstant und mit einer gesteuerten Geschwindigkeit an die mobile Plattform (3, 3') zurückführt, um deren Aufstiegsgeschwindigkeit in ihrer Gesamtheit sicherzustellen.

2. Fahrzeug nach Anspruch 1, **dadurch gekennzeichnet, dass** die elastische Verformungsvorrichtung (5, 5'a, 5'b) eine Gasdruckfeder ist, deren Schub deutlich konstant ist, deren Geschwindigkeit gesteuert wird, und die einen Körper (51, 51a, 51b) und eine bewegliche Stange (52, 52a, 52b) umfasst, von denen einer mit der Plattform (3, 3') und die andere fest mit dem Rahmenwerk (2) verbunden ist.

3. Fahrzeug nach Anspruch 2, **dadurch gekennzeichnet, dass** die Gasdruckfeder so konfiguriert ist, dass sie eine aufwärts gerichtete Kraft aufweist, die größer als das Gewicht der mobilen Plattform und des zu bewegenden Objekts (O) ist, um den autonomen Aufstieg der Plattform (3, 3') mit dem Objekt vollständig zu gewährleisten.

4. Fahrzeug nach Anspruch 2 oder 3, **dadurch gekennzeichnet, dass** die Gasdruckfeder parallel zur Gleitschiene (41, 410a, 410b) und dem Schieber (42, 420a, 420b) verläuft.

5. Fahrzeug nach einem der Ansprüche 2 bis 4, **dadurch gekennzeichnet, dass** die Gasdruckfeder eine Schubfeder ist.

6. Fahrzeug nach einem der vorstehenden Ansprüche, **dadurch gekennzeichnet, dass** die Sperrmittel der Plattform in der oberen Position und/oder die Sperrmittel der Plattform (3, 3') in der unteren Position ein bewegliches Ventil zum Blockieren der Kolbenöffnung eines Zylinders umfassen, das verhindert, dass das im Zylinder vorhandene Fluid von einer Kammer zur anderen davon übergeht.

7. Fahrzeug nach einem der vorstehenden Ansprüche, **dadurch gekennzeichnet, dass** das Rahmenwerk (2) mit einer starren Stange (28) ausgerüstet ist, an der sich der Bediener festhalten kann, um seinen Aufstieg auf der mobilen Plattform (3) zu vereinfachen und zu sichern, wobei diese starre Stange (28) mit zumindest einem Betätigungsgriff (280) für die Sperrmittel (6) der Plattform in der oberen Position und/oder Sperrmittel (7) der Plattform in der unteren Position ausgestattet ist.

8. Fahrzeug nach einem der vorstehenden Ansprüche, **dadurch gekennzeichnet, dass** die Sperrmittel (6) der Plattform in der oberen Position einen Haken (60a, 60b, 60'), den sogenannten "ersten Haken", umfassen, der um eine am Rahmenwerk (2) befestigte Achse (270a, 270b, 61') schwenkbar gelagert ist, und dessen gekrümmtes Ende (62a, 62b) so konfiguriert ist, dass es mit einem an der mobilen Plattform (3) befestigten Sperrstift (36a, 36b, 411) zusammenwirkt.

9. Fahrzeug nach Anspruch 8, **dadurch gekennzeichnet, dass** die Sperrmittel (6) der Plattform in der oberen Position automatische Sperrmittel sind, dadurch, dass der erste Haken (60a, 60b) mit einer Rückstellfeder (64a, 64b) ausgerüstet ist, die ständig danach strebt, sie in die Sperrposition zurückzuführen, und dadurch, dass die Sperrmittel (6) ein Betätigungselement (280, 65a, 65b) umfassen, mit dem der erste Haken (60a, 60b) gegen die Kraft der Rückstellfeder (64a, 64b) geschwenkt werden kann, um ihn in eine sperrfreie Position zu bringen, in der er den Sperrstift (36a, 36b) freigibt.

10. Fahrzeug nach einem der vorstehenden Ansprüche, **dadurch gekennzeichnet, dass** die Sperrmittel (7) der Plattform in der unteren Position einen Haken, den sogenannten "zweiten Haken" (70a, 70b), umfassen, der um eine am Fahrgestell (2) befestigte Achse (28a) schwenkbar gelagert ist, und dessen gekrümmtes Ende (72a, 72b) so konfiguriert ist, dass es mit einer fest mit der Plattform (3) verbundenen Zahnstange (37a, 37b) zusammenwirkt.

11. Fahrzeug nach Anspruch 8 oder 9, **dadurch gekennzeichnet, dass** die Sperrmittel (7) der Plattform in der unteren Position einen Haken (70a, 70b), den sogenannten "zweiten Haken", umfassen, der um eine am Rahmenwerk (2) befestigte Achse (28a) schwenkbar gelagert ist, und dessen gekrümmtes Ende (72a, 72b) so konfiguriert ist, dass es mit einer Zahnstange (37a, 37b) zusammenwirkt, die fest mit der Plattform (3) verbunden ist, und dass der erste Haken (60a, 60b, 60') und der zweite Haken (70a, 70b, 70') kinematisch verbunden sind, so dass ihre Anordnungen in gesperrter oder offener Position gleichzeitig eintreten.

12. Fahrzeug nach einem der vorstehenden Ansprüche, **dadurch gekennzeichnet, dass** die Plattform (3) mit zumindest einem Dämpfer ausgestattet ist, mit dem ihre Auf- und Abstiegsgeschwindigkeit gesteuert werden kann.

13. Fahrzeug nach einem der vorstehenden Ansprüche, **dadurch gekennzeichnet, dass** es eine Verstelleinrichtung für die von der/den elastischen Verformungsvorrichtung(en) (5, 5'a, 5'b) ausgeübten Schubkraft umfasst.

## Claims

1. A vehicle (1), in particular a commercial vehicle, equipped with a freight elevator (10) configured to move an object (O), such as a construction machine, from the ground to the inside of the vehicle and conversely, this freight elevator (10) comprising:
- a fixed frame (2) secured to said vehicle,
- a platform (3, 3') supporting said object (O) and movable relative to said frame (2), according to an upward motion, between a position, called "low" position, in which it is at ground level or substantially at ground level, so as to allow the loading or unloading of said object (O) from or to the ground by an operator, and a position, called "high" position, and conversely according to a downward motion,
- at least one means (4, 4") for guiding the movement of said platform (3, 3') relative to said frame (2),
- at least one means (6, 6') for locking said platform in the high position,
- at least one means (7, 7') for locking said platform in the low position,
- at least one elastically deformable device (5, 5'a, 5'b), a fixed portion (51, 51a, 51b) of which is mechanically linked to said frame (2) and an elastically deformable or elastically movable portion (52, 52a, 52b) of which is mechanically linked to said movable platform (3, 3'),
this freight elevator (10) being **characterized in that** said movement guide means (4) comprises a slide (41, 410a, 410b) and a slider (42, 420a, 420b), one of which secured to said movable platform (3, 3') and the other secured to the frame (2), so as to perform a translational motion of the platform relative to said frame, in a vertical or substantially vertical direction between said low and high positions of the platform (3, 3'),
and **in that** the elastically deformable device (5, 5'a, 5'b) is configured to:
- accumulate, during the downward translational motion of the platform (3, 3') down to its low position, the potential energy of the gravity field provided beforehand by at least one operator standing on the movable platform (3, 3') when it is in the high position or provided beforehand by at least one operator standing on the movable platform (3, 3') and by the object (O) placed on the movable platform when it is in the high position,
- control the descent speed of the movable platform,
- restore this accumulated potential energy, in a substantially constant manner and with a controlled speed, to said movable platform (3, 3'), in order to ensure, entirely, the upward motion thereof.

2. The vehicle according to claim 1, **characterized in that** the elastically deformable device (5, 5'a, 5'b) is a gas cylinder having a substantially constant thrust and a controlled speed and comprising a body (51, 51a, 51b) and a movable rod (52, 52a, 52b), one of which secured to the platform (3, 3') and the other secured to the frame (2).

3. The vehicle according to claim 2, **characterized in that** said gas cylinder is configured to have an upward force greater than the weight of the movable platform and of the object (O) to be moved, so as to ensure entirely the autonomous ascension of the platform (3, 3') with the object.

4. The vehicle according to claim 2 or 3, **characterized in that** the gas cylinder is parallel to the slide (41, 410a, 410b) and to the slider (42, 420a, 420b).

5. The vehicle according to any of claims 2 to 4, **characterized in that** the gas cylinder is a thrust spring.

6. The vehicle according to any of the preceding claims, **characterized in that** the means for locking the platform in the high position and/or the means for locking the platform (3, 3') in the low position comprise a movable valve for obstructing the orifice of the piston of a cylinder to prevent the fluid present in the latter from moving from one chamber to the other thereof.

7. The vehicle according to any of the preceding claims, **characterized in that** the fixed frame (2) is equipped with a rigid bar (28) allowing the operator to hold onto it in order to facilitate and secure his climbing on the movable platform (3), this rigid bar (28) being equipped with at least one handle (280) for actuating the means (6) for locking the platform in the high position and/or the means (7) for locking the platform in the low position.

8. The vehicle according to any of the preceding claims, **characterized in that** the means (6) for locking the platform in the high position comprise a hook (60a, 60b, 60'), called "first hook", pivotally mounted about an axis (270a, 270b, 61') attached to the frame (2) and the curved end (62a, 62b) of which is configured to cooperate with a locking finger (36a, 36b, 411) secured to the movable platform (3).

9. The vehicle according to claim 8, **characterized in that** the means (6) for locking the platform in the high position are automatic locking means, **in that** the first hook (60a, 60b) is equipped with a return spring (64a, 64b) which tends constantly to bring it back into the locked position and **in that** said locking means (6) comprise an actuating member (280, 65a, 65b) that makes it possible for said first hook (60a, 60b) to pivot against the force of the return spring (64a, 64b) in order to bring it into an unlocked position in which it releases said locking finger (36a, 36b).

10. The vehicle according to any of the preceding claims, **characterized in that** the means (7) for locking the platform in the low position comprise a hook (70a, 70b), called "second hook", pivotally mounted about an axis (28a) attached to the frame (2) and the curved end (72a, 72b) of which is configured to cooperate with a rack (37a, 37b) secured to the platform (3).

11. The vehicle according to claim 8 or 9, **characterized in that** the means (7) for locking the platform in the low position comprise a hook (70a, 70b), called "second hook", pivotally mounted about an axis (28a) attached to the frame (2) and the curved end (72a, 72b) of which is configured to cooperate with a rack (37a, 37b) secured to the platform (3) and **in that** the first hook (60a, 60b, 60') and the second hook (70a, 70b, 70') are kinematically linked together, so that their placement in the locked or unlocked position are concomitant.

12. The vehicle according to any of the preceding claims, **characterized in that** the platform (3) is equipped with at least one damper for controlling its ascent or descent speed.

13. The vehicle according to any of the preceding claims, **characterized in that** it comprises a device for adjusting the thrust force exerted by the elastically deformable device(s) (5, 5'a, 5'b).
